# EUROPEAN PATENT APPLICATION

(11) **EP 4 651 343 A1**
(43) Date of publication of application: **19.11.2025**
(21) Application number: 25176340.5
(22) Date of filing: 14.05.2025
(51) Int. Cl.: H02K 1/18, H02K 3/24, H02K 5/08, H02K 5/20, H02K 15/121, H02K 15/122, H02K 21/24

(54) **AXIAL FLUX MOTOR**

(30) Priority: 14.05.2024 US 202463647085 P; 27.11.2024 CN 202411711953
(71) Applicant: Delta Electronics, Inc., Taoyuan City 333 (TW)
(72) Inventor: CHEN, Yi-No, 333 Taoyuan City (TW); HSU, Tzu-Ting, 333 Taoyuan City (TW)
(74) Representative: Riccardi, Elisa

(57) **Abstract**

An axial flux motor includes a rotor and a stator, and the stator is at least partially overlapped with the rotor in the axial direction. The stator includes a soft magnetic material body, a plurality of conductor wires, a housing, and a thermosetting insulating material. The soft magnetic material body has a plurality of slots. The conductor wires pass through the slots in a radial direction to form a plurality of windings. The housing surrounds the soft magnetic material body. The thermosetting insulating material is connected between the soft magnetic material body and the housing, and filled into gaps of the conductor wires and the slots.

## Description

### BACKGROUND

### Field of Disclosure

The present disclosure relates to a motor, and more particularly to a securing structure of a stator of an axial flux motor.

### Description of Related Art

Motors are components configured to convert electrical energy into mechanical energy and have been widely used in daily life. The current axial flux motor utilizes partially extending the inner cylindrical surface of the stator core to the inner diameter and combining it with a supporting structure. The disadvantage is that the manufacturing process is complicated and the bent single-layer silicon steel sheet is used to connect an inner diameter supporting structure, which will cause the bent silicon steel sheet deformed and affect the structural rigidity and reliability.

### SUMMARY

The present disclosure provides an axial flux motor to deal with the needs of the prior art problems.

In one or more embodiments, an axial flux motor includes a rotor and a stator at least partially overlapped with the rotor in an axial direction. The stator includes a soft magnetic material body having a plurality of slots; a plurality of conductor wires routed through the slots in a radial direction to form a plurality of windings; a housing surrounding the soft magnetic material body; and a thermosetting insulating material connected between the soft magnetic material body and the housing, and filled among the conductor wires and in the slots.

In one or more embodiments, the rotor includes two separated rotor bodies, and the stator is located between the two separated rotor bodies in the axial direction.

In one or more embodiments, the soft magnetic material body comprises a first portion, a second portion and a board, wherein the board is located between the first portion and the second portion and connected to the housing.

In one or more embodiments, the housing has a sidewall facing the soft magnetic material body and comprising at least one concave structure and at least one convex structure, the board is connected to the at least one convex structure, and the at least one concave structure and the at least one convex structure are both connected to the thermosetting insulating material.

In one or more embodiments, the board, the first portion, the second portion and the housing define two separate spaces to accommodate the thermosetting insulating material.

In one or more embodiments, the conductor wires include a plurality of outer diameter protrusions exposed outside an outer diameter sidewall of the soft magnetic material body, and the thermosetting insulating material is filled among the outer diameter protrusions.

In one or more embodiments, the housing is spaced from the outer diameter protrusions, and the thermosetting insulating material is connected between the housing and the outer diameter protrusions.

In one or more embodiments, the stator further includes a board connected between the housing and the soft magnetic material body, and the thermosetting insulating material is accommodated in a space defined by the board, the housing and the soft magnetic material body.

In one or more embodiments, the axial flux motor further includes a plurality of cooling channels enclosed in the thermosetting insulating material.

In one or more embodiments, the housing is not overlapped with the rotor in the axial direction.

In sum, the stator of the axial flux motor disclosed herein adopts a flowable thermosetting insulating material that can flow first and then solidify, and form a fixed structure between the housing and the soft magnetic material body. By utilizing the flowability of the material, this structure can extend to fill the gaps among the conductor wires and among the conductor wires and the soft magnetic material body, further enhancing the ability of the stator composed of the conductor wires and the soft magnetic material body to resist axial deformation. In order to strengthen the axial support force between the housing and the thermosetting insulating material, an inner side of the housing can be made with concave and convex structural features of any sizes, and the thermosetting insulating material can be formed to fit with the housing by taking advantage of the flowability characteristics of the thermosetting insulating material. Cooling channels can be designed inside and outside the housing so that the heat generated by the conductor wires can be conducted to the coolant through the thermosetting insulating material to achieve a heat dissipation effect.

It is to be understood that both the foregoing general description and the following detailed description are by examples, and are intended to provide further explanation of the disclosure as claimed.

### BRIEF DESCRIPTION OF THE DRAWINGS

The disclosure can be more fully understood by reading the following detailed description of the embodiment, with reference made to the accompanying drawings as follows:
Fig. 1 illustrates a perspective view of a stator of an axial flux motor according to an embodiment of the present disclosure;
Fig. 2 illustrates a cross-sectional view along the section line 2-2 in Fig. 1;
Fig. 3 illustrates a cross-sectional view of an axial flux motor according to an embodiment of the present disclosure;
Fig. 4 illustrates a cross-sectional view of an axial flux motor according to another embodiment of the present disclosure;
Fig. 5 illustrates a cross-sectional view of a stator of an axial flux motor according to an embodiment of the present disclosure;
Fig. 6 illustrates a cross-sectional view of a stator of an axial flux motor according to another embodiment of the present disclosure;
Fig. 7 illustrates a cross-sectional view of a stator of an axial flux motor according to still another embodiment of the present disclosure; and
Fig. 8 illustrates a cross-sectional view of an axial flux motor according to yet another embodiment of the present disclosure.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts.

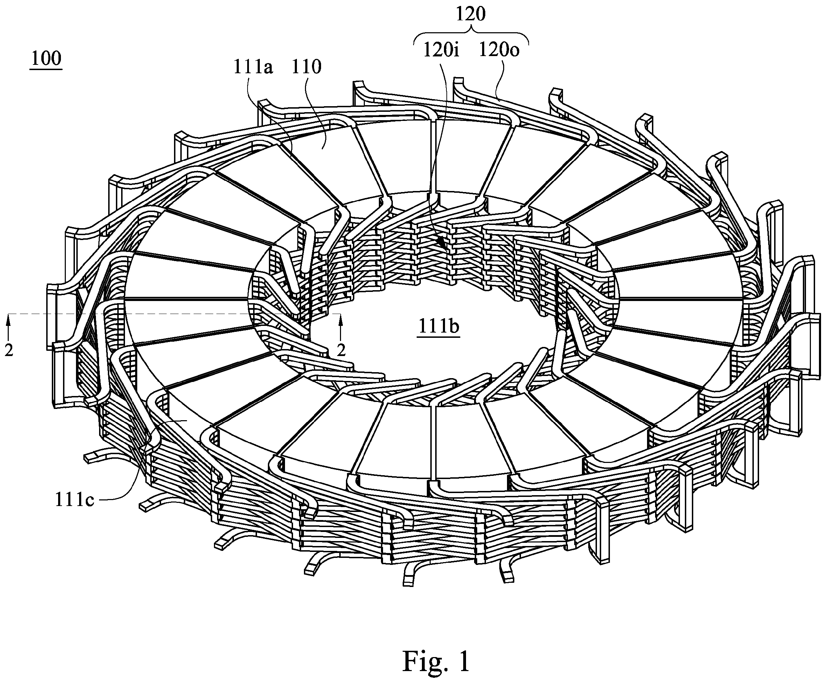

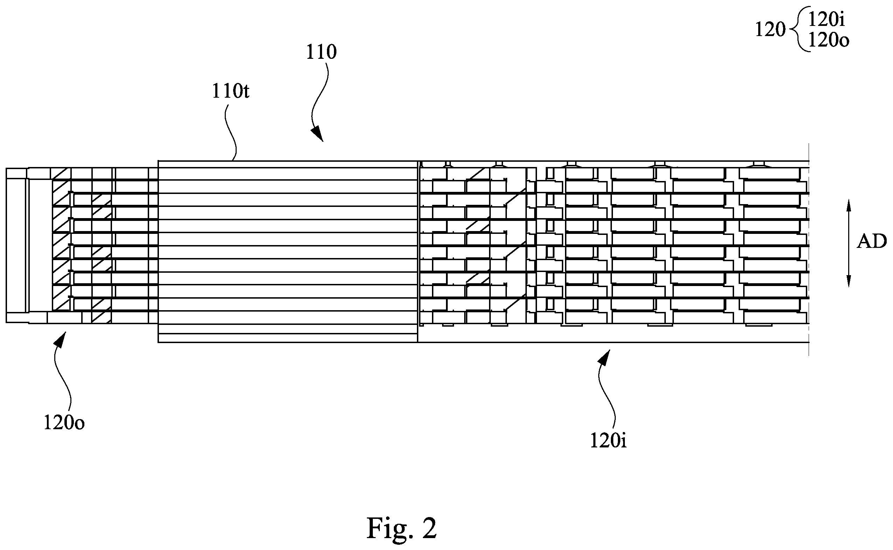

Reference is made to Figs. 1 and 2, the stator 100 includes a soft magnetic material body 110 and a plurality of conductor wires 120. The soft magnetic material body 110 has a plurality of slots 111a. In some embodiments of the present disclosure, the soft magnetic material body 110 includes 24 slots 111a through which a plurality of conductor wires 120 are routed in a distributed winding manner to form a plurality of windings (e.g., distributed windings). Taking a three-phase flux motor as an example, 24 slots 111a divided by 3 (phases) can yield 8 magnetic poles. In other words, each section of three slots forms a magnetic pole. In some embodiments of the present disclosure, each conductor wire 120 includes a plurality of inner diameter protrusions 120i and a plurality of outer diameter protrusions 120o. The inner diameter protrusions 120i are located in an internal space 111b surrounding the axis of the soft magnetic material body 110. The outer diameter protrusions 120o protrude and are exposed outside an outer diameter sidewall 111c of the soft magnetic material body 110. In some embodiments of the present disclosure, the soft magnetic material body 110 is formed by stacking a plurality of silicon steel sheets 110t along an axial direction AD. In some embodiments of the present disclosure, the soft magnetic material body 110 may also be formed by a plurality of silicon steel sheets stacked in a radial direction (not shown). In some embodiments of the present disclosure, the soft magnetic material body 110 may also be composed of a soft magnetic composite (SMC) (not shown).

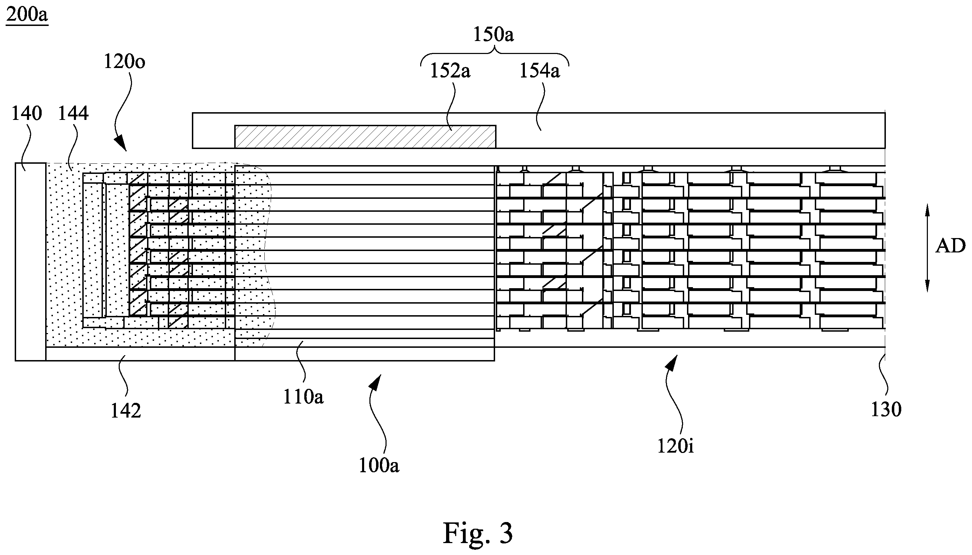

Reference is made to Fig. 3, the axial flux motor 200a includes a rotor 150a and a stator 100a. The stator 100a and the rotor 150a are at least partially overlapped with each other in the axial direction AD. The rotor 150a rotates relative to the stator 100a around a rotation axis 130 under the mutual magnetic force between the rotor 150a and the stator 100a. In some embodiments of the present disclosure, the rotor 150a includes a support structure 154a and a magnet structure 152a. The magnet structure 152a is embedded within the support structure 154a. In some embodiments of the present disclosure, the stator 100a includes a first portion 110a made of a soft magnetic material, a plurality of conductor wires 120, a housing 140, and a thermosetting insulating material 144. The first portion 110a of the soft magnetic material body has a plurality of slots 111a through which the conductor wires 120 are routed in the radial direction to form a plurality of windings (please refer to Figs. 1 and 2). The housing 140 surrounds the first portion 110a of the soft magnetic material body. The thermosetting insulating material 144 is connected between the first portion 110a of the soft magnetic material body and the housing 140 and is filled among the conductor wires 120 and into the slots 111a.

In some embodiments of the present disclosure, the stator 100a further includes a board 142 connected between the housing 140 and the first portion 110a of the soft magnetic material body, and the thermosetting insulating material 144 is accommodated in the space defined by the board 142 and the housing 140, and the first portion 110a of the soft magnetic material body 110.

In some embodiments of the present disclosure, the conductor wires 120 include a plurality of outer diameter protrusions 120o exposed outside the outer diameter sidewall of the first portion 110a of the soft magnetic material body 110, and the thermosetting insulating material 144 is filled among the outer diameter protrusions 120o (e.g., filled in the gaps of the outer diameter protrusions 120o).

In some embodiments of the present disclosure, the housing 140 is spaced from the outer diameter protrusions 120o, and the thermosetting insulating material 144 is connected between the housing 140 and the outer diameter protrusions 120o.

In some embodiments of the present disclosure, the housing 140 is not overlapped with or aligned with the rotor 150a in the axial direction AD.

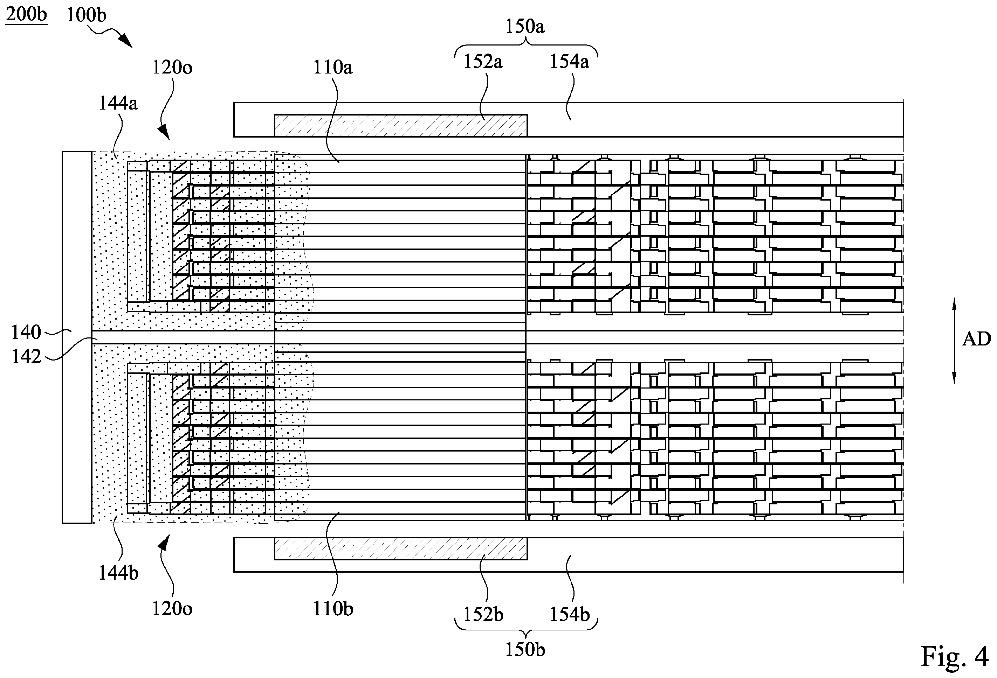

Reference is made to Fig. 4, the rotor of the axial flux motor 200b includes two separated rotor bodies (150a, 150b), and the stator 100b of the axial flux motor 200b also includes two spaced upper and lower conductor wires 120. The upper and lower conductor wires 120 of the stator 100b and the two separated rotor bodies (150a, 150b) are at least partially overlapped in the axial direction AD. The upper and lower conductor wires 120 are arranged through the first and second portions (110a, 110b) of the soft magnetic material body 110 respectively. The two rotor bodies (150a, 150b) and the upper and lower conductor wires 120 of the stator 100b rotate relative to the stator 100b around the rotation axis 130 under the mutual magnetic force. In some embodiments of the present disclosure, the rotor 150a includes a support structure 154a and a magnet structure 152a, wherein the magnet structure 152a is embedded in the support structure 154a, and the rotor 150b includes a support structure 154b and a magnet structure 152b, wherein the magnet structure 152b is embedded in the support structure 154b. In some embodiments of the present disclosure, the stator 100b includes a first portion 110a and a second portion 110b of the soft magnetic material body 110, upper and lower conductor wires 120, a housing 140, a board 142 and a thermosetting insulating material (144a, 144b). The first and second portions (110a, 110b) of the soft magnetic material body both have a plurality of slots 111a for the conductor wires 120 to pass through in the radial direction to form a plurality of windings (referring to Figs. 1 and 2). The housing 140 surrounds the first and second portions (110a, 110b) of the soft magnetic material body. The thermosetting insulating material 144 is connected between the first portion 110a of the soft magnetic material body and the housing 140, and the thermosetting insulating material 144 is filled among the conductor wires 120 and into the slots 111a.

In some embodiments of the present disclosure, the stator 100b is located between two separated rotor bodies (150a, 150b).

In some embodiments of the present disclosure, the board 142 is located between the two stator bodies (i.e., between the first and second portions (110a, 110b) of the soft magnetic material body).

In some embodiments of the present disclosure, the board 142, the first and second portions (110a, 110b) of the soft magnetic material body 110 and the housing 140 define two separate spaces to accommodate the thermosetting insulating material (144a, 144b). In other words, the first space defined by the board 142, the first portion 110a of the soft magnetic material body 110 and the housing 140 is used to accommodate the thermosetting insulating material 144a, while the second space defined by the board 142, the second portion 110b of the soft magnetic material body and the housing 140 is used to accommodate the thermosetting insulating material 144b.

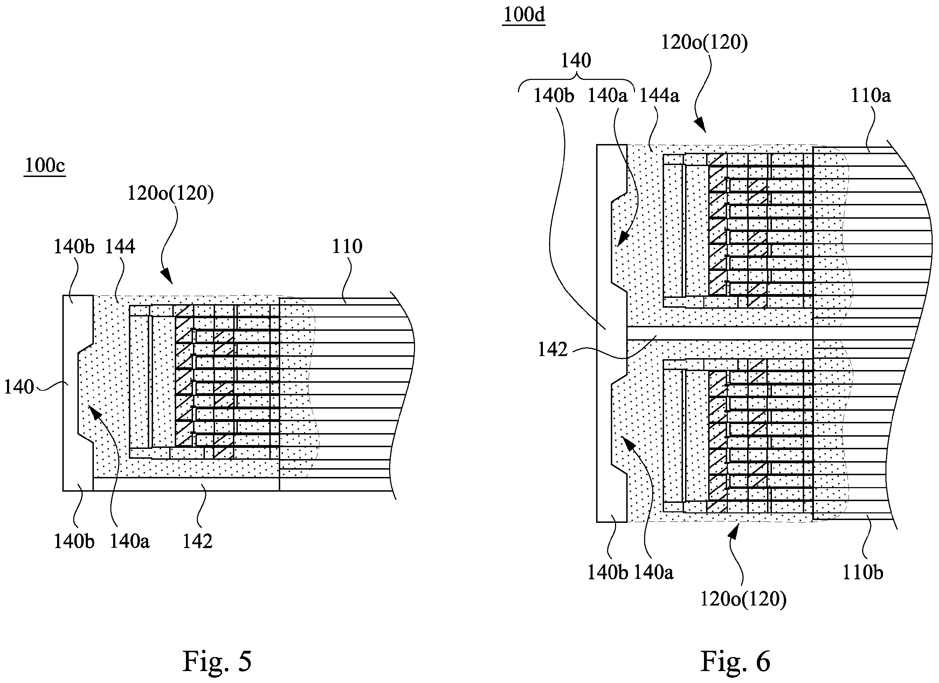

Reference is made to Fig. 5, the stator 100c includes a soft magnetic material body 110, a plurality of conductor wires 120, a housing 140, a board 142 and a thermosetting insulating material 144. In some embodiments of the present disclosure, the housing 140 has a sidewall facing the soft magnetic material body 110 and including a plurality of concave structures 140a and a plurality of convex structures 140b, and the board 142 is connected to the convex structures 140b of the housing 140 and between the first and second portions (110a, 110b) of the soft magnetic material body 110. The concave structure 140a and the convex structure 140b of the housing 140 are configured to be in contact with the thermosetting insulating material 144, which is beneficial to increase the adhesion of the thermosetting insulating material 144 to the housing 140. In some embodiments of the present disclosure, the housing 140 is not in contact with or spaced from the outer diameter protrusions 120o of the conductor wires 120, and the thermosetting insulating material 144 is connected between the housing 140 and the outer diameter protrusions 120o and filled into the concave structure 140a the housing 140.

Reference is made to Fig. 6. In some embodiments of the present disclosure, the stator 100d includes a first part and a second part (110a, 110b) of a soft magnetic material body, upper and lower conductor wires 120, a housing 140, a board 142 and a thermosetting insulating material (144a, 144b). In some embodiments of the present disclosure, the first space defined by the board 142, the first portion 110a of the soft magnetic material body, and the housing 140 is used to accommodate the thermosetting insulating material 144a, and the second space defined by the portion 110b and the housing 140 is used to accommodate the thermosetting insulating material 144b. A sidewall of the housing 140 facing the soft magnetic material body 110 and including a plurality of concave structures 140a and convex structures 140b. The board 142 is located between the first and second portions (110a, 110b) of the soft magnetic material body and is connected to the convex structure 140b of the housing 140. The concave structure 140a and the convex structure 140b of the housing 140 are beneficial to increase the adhesion of the thermosetting insulating material (144a, 144b) to the housing 140. In some embodiments of the present disclosure, the housing 140 is not in contact with or spaced from the outer diameter protrusions 120o of the conductor wires 120, and the thermosetting insulating materials (144a, 144b) are connected between the housing 140 and the outer diameter protrusions 120o, and filled into the concave structure 140a of the housing 140.

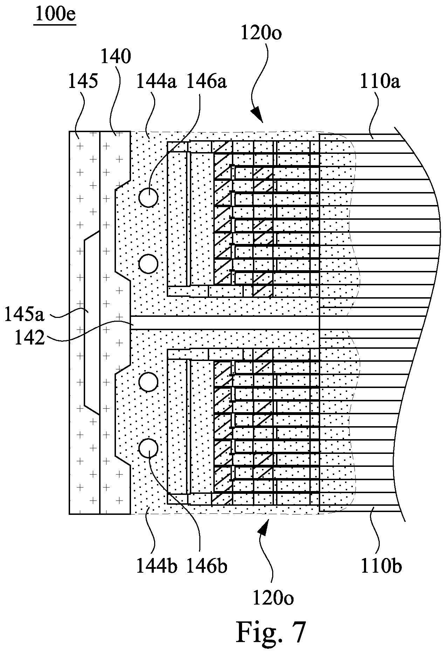

Reference is made to Fig. 7. The stator 100e is different from the stator 100d mainly in that a cooling channel is added. Specifically, the thermosetting insulating material 144a may enclose and secure a plurality of cooling channels 146a within, and the thermosetting insulating material 144b may enclose and secure a plurality of cooling channels 146b. In some embodiments of the present disclosure, a housing 145 may be added to an outer side of the housing 140 (i.e., the side facing away from the soft magnetic material body) to form a cooling channel 145a between the housing 145 and the housing 140.

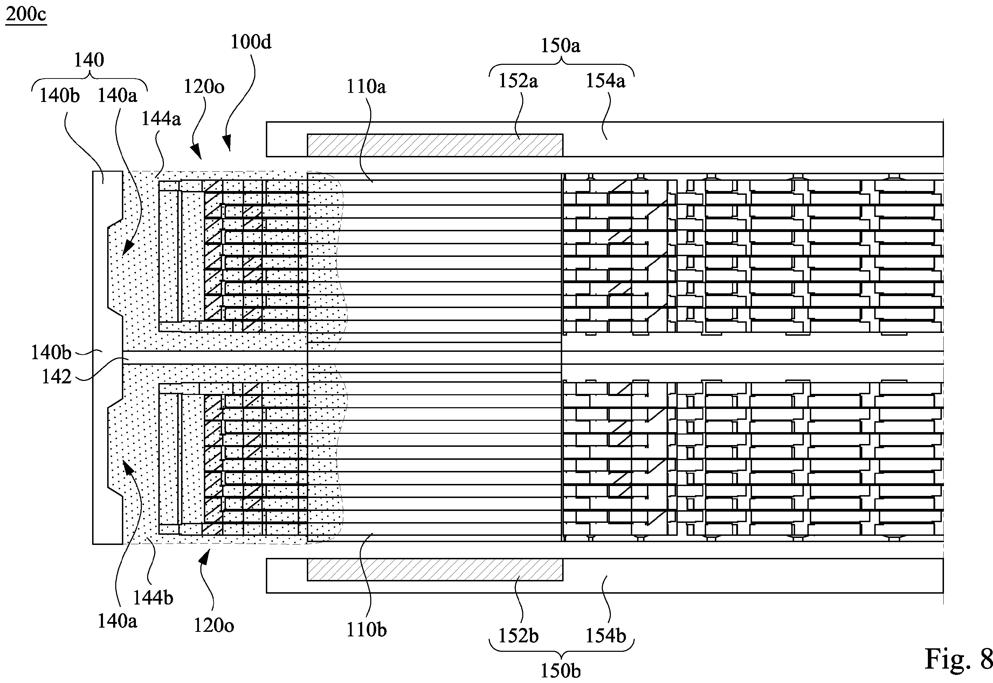

Reference is made to Fig. 8. The axial flux motor 200c includes the aforementioned stator 100d and two separated rotor bodies (150a, 150b). The stator 100d is located between two separated rotor bodies (150a, 150b). The axial flux motor 200c differs from the axial flux motor 200b mainly in the concave-convex structure of the housing 140. Specifically, the housing 140 has a sidewall facing the soft magnetic material body 110 and including a plurality of concave structures 140a and convex structures 140b, and the board 142 is located between the first and second portions (110a, 110b) of the soft magnetic material body, and connected to the convex structure 140b of the housing 140. The concave structure 140a and the convex structure 140b of the housing 140 are beneficial to increase the adhesion of the thermosetting insulating material (144a, 144b) to the housing 140. In some embodiments of the present disclosure, the housing 140 is not in contact with or spaced from the outer diameter protrusions 120o of the conductor wires 120, and the thermosetting insulating materials (144a, 144b) are connected between the housing 140 and the outer diameter protrusions 120o, and filled into the concave structure 140a of the housing 140.

The stator of the axial flux motor disclosed herein adopts a flowable thermosetting insulating material that can flow first and then solidify, and forms a fixed structure between the housing and the soft magnetic material body. By utilizing the flowability of the material, this structure can extend to fill the gaps among the conductor wires and among the conductor wires and the soft magnetic material body, further enhancing the ability of the stator composed of the conductor wires and the soft magnetic material body to resist axial deformation. In order to strengthen the axial support force between the housing and the thermosetting insulating material, an inner side of the housing can be made with concave and convex structural features of any sizes, and the thermosetting insulating material can be formed to fit with the housing by taking advantage of the flowability characteristics of the thermosetting insulating material. Cooling channels can be designed inside and outside the housing so that the heat generated by the conductor wires can be conducted to the coolant through the thermosetting insulating material to achieve a heat dissipation effect.

## Claims

1. An axial flux motor(200a,200b,200c) comprising:
a rotor(150a); and
a stator(100a,100b,100c,100d,100e) at least partially overlapped with the rotor(150a) in an axial direction(AD) and comprising:
a soft magnetic material body(110) having a plurality of slots(111a);
a plurality of conductor wires(120) routed through the slots(111a) in a radial direction to form a plurality of windings;
a housing(140) surrounding the soft magnetic material body(110); and
a thermosetting insulating material(144) connected between the soft magnetic material body(110) and the housing(140), and filled among the conductor wires(120) and in the slots(111a).

2. The axial flux motor(200a,200b,200c) of claim 1, wherein the rotor(150a) comprises two separated rotor bodies(150a,150b), and the stator(100b,100d,100e) is located between the two separated rotor bodies(150a,150b) in the axial direction(AD).

3. The axial flux motor(200a,200b,200c) of claim 2, wherein the soft magnetic material body(110) comprises a first portion(110a), a second portion(110b) and a board(142), wherein the board(142) is located between the first portion(110a) and the second portion(110b) and connected to the housing(140).

4. The axial flux motor(200a,200b,200c) of claim 3, wherein the housing(140) has a sidewall facing the soft magnetic material body(110) and comprising at least one concave structure(140a) and at least one convex structure(140b), the board(142) is connected to the at least one convex structure(140b), and the at least one concave structure(140a) and the at least one convex structure(140b) are connected to the thermosetting insulating material(144).

5. The axial flux motor(200a,200b,200c) of claim 3, wherein the board(142), the first portion(110a), the second portion(110b) and the housing(140) define two separate spaces to accommodate the thermosetting insulating material(144, 144a, 144b).

6. The axial flux motor(200a,200b,200c) of claim 1, wherein the conductor wires(120) include a plurality of outer diameter protrusions(120o) exposed outside an outer diameter sidewall(111c) of the soft magnetic material body(110), and the thermosetting insulating material(144) is filled among the outer diameter protrusions(120o).

7. The axial flux motor(200a,200b,200c) of claim 6, wherein the housing(140) is spaced from the outer diameter protrusions(120o), and the thermosetting insulating material(144) is connected between the housing(140) and the outer diameter protrusions(120o).

8. The axial flux motor(200a,200b,200c) of claim 1, wherein the stator(100a,100c) further comprises a board(142) connected between the housing(140) and the soft magnetic material body(110), and the thermosetting insulating material(144) is accommodated in a space defined by the board(142), the housing(140) and the soft magnetic material body(110).

9. The axial flux motor(200a,200b,200c) of claim 1, further comprising a plurality of cooling channels(146a,146b) enclosed in the thermosetting insulating material(144).

10. The axial flux motor(200a,200b,200c) of claim 1, wherein the housing(140) is not overlapped with the rotor(150a) in the axial direction(AD).
